# EUROPÄISCHE PATENTSCHRIFT

(11) **EP 2 068 015 B1**
(45) Veröffentlichungstag und Bekanntmachung des Hinweises auf die Patenterteilung: **19.06.2013**
(21) Anmeldenummer: 08019713.0
(22) Anmeldetag: 12.11.2008
(51) Int. Cl.: F16C 29/02, F16C 32/06

(54) **Hydrostatisches Lagerungssystem**
Hydrostatic bearing system
Système de palier hydrostatique

(30) Priorität: 05.12.2007 DE 102007058572
(43) Veröffentlichungstag der Anmeldung: 10.06.2009
(73) Patentinhaber: Hydac International GmbH, 66280 Sulzbach/Saar (DE)
(72) Erfinder: Hahmann, Wolfgang, Dr., 47906 Kempen (DE)
(74) Vertreter: Bartels & Partner

(56) Entgegenhaltungen:
- EP-A1- 0 353 427
- DE-A1- 1 575 464
- DE-C1- 3 827 836

## Beschreibung

Die Erfindung betrifft ein hydrostatisches Lagerungssystem, insbesondere zur Lagerung von Maschinenkomponenten an Führungen von Werkzeugmaschinen, mit zumindest einer hydrostatischen Lagertasche, zu der von einer Druckquelle des hydraulischen Systems her ein tragender Drucköl-Volumenstrom zuführbar ist, wobei an jeder Lagertasche ein Rücklaufsammler zur Aufnahme von Öl vorgesehen ist, das über den die jeweilige Lagertasche begrenzenden Hochdruck-Dichtspalt aus der Lagertasche austritt, und mit einer eine Förderpumpe enthaltenden Abströmeinrichtung zum Rückführen von Öl aus den Rücklaufsammlern zum System.

Derartige Lagerungssysteme (JP 2000 346072 A, Abstract) kommen beispielsweise bei Werkzeugmaschinen anstelle von reinen Gleitlagerungen oder von Wälzlagerungen in solchen Fällen zur Anwendung, wo bewegte Maschinenteile mit äußerster Genauigkeit geführt werden müssen. Die beim Betrieb von Werkzeugmaschinen unvermeidbaren Schwingungen, die durch die hohen dynamischen Prozeßkräfte angeregt werden, die bei Zerspanungsvorgängen oder beim schnellen Positionieren von Maschinenteilen auftreten, beeinträchtigen bei reinen Gleitlagerungen oder Wälzlagerungen die Genauigkeit oder Qualität der auf den Maschinen hergestellten Teile, und zwar sowohl bei Rotations- als auch bei Linearlagern. Durch die Benutzung von hydrostatischen Lagerungssystemen läßt sich dieser Nachteil mildern, weil hydrostatische Lagerungssysteme sich durch vergleichsweise bessere Dämpfungseigenschaften auszeichnen.

In Fällen, wo ein Bedarf an höchster Lagerqualität gegeben ist, insbesondere bei Linearführungen an denen Bearbeitungswerkzeuge geführt sind, sind auch die bekannten hydrostatischen Lagerungssysteme nicht zufriedenstellend, wenn es um die Erreichung guter Bearbeitungsqualität, etwa höchste Oberflächengüte bei Zerspanungsvorgängen, geht.

Durch die DE 38 27 836 C1 ist eine durchbiegungssteuerbare Walze bekannt, die ein sog. undrehbares Querhaupt aufweist, auf welchem eine um dieses umlaufende Hohlwalze über Stützelemente abgestützt ist, die ihrerseits an mindestens einer Kolben-Zylindereinheit verlagerbar sind, aus deren Zylinderkammer Druckflüssigkeit über Drosselbohrungen in Lagertaschen in der Anlagefläche des Stützelementes als Bestandteil eines Lagers übertritt. An der Rückseite des jeweiligen Stützelementes ist eine zusätzliche Kolben-Zylindereinheit vorgesehen, mittels deren auf das Stützelement sowohl gegen den Innenumfang der Hohlwalze gerichtete als auch von diesem hinweg gerichtete Zusatzkräfte ausübbar sind. Dergestalt kann das Betriebsverhalten des Stützelementes in mannigfacher Weise beeinflußt werden, um eine sichere Lagerung im Sinne einer Mengenregelung für die Lagertaschen des Stützelementes zu erreichen.

Durch die US 5 971 068 A ist ein hydrostatisches Lagerungssystem bekannt, das mit einer Wärmetauschereinrichtung in Verbindung steht, um dergestalt abhängig von Umgebungstemperaturen das eingesetzte Drucköl auf konstanter Temperatur zu halten, um dergestalt einen hoch genauen Betrieb des hydrostatischen Lagerungssystems gewährleisten zu können. Für eine praktische Anwendung wird bei der bekannten Lösung das jeweilige hydrostatische Lager zur Lagerung eines astronomischen Teleskops eingesetzt, um es einer Steuer- und Regelungseinheit zu ermöglichen, hoch genau das Teleskop auf ein zu beobachtendes Himmelsobjekt zu richten und unabhängig von der Erddrehung zu fixieren. Die dahingehend bekannte Lösung baut kompliziert auf und ist teuer in der Realisierung.

Im Hinblick hierauf stellt sich die Erfindung die Aufgabe, ein hydrostatisches Lagerungssystem zur Verfügung zu stellen, das sich trotz einfacher und kompakter Bauweise durch ein Höchstmaß an Lagerungsgüte auszeichnet.

Erfindungsgemäß ist diese Aufgabe durch ein hydrostatisches Lagerungssystem gelöst, das die Merkmale des Patentanspruches 1 in seiner Gesamtheit aufweist.

Dadurch, dass gemäß dem kennzeichnenden Teil des Anspruches 1 die Förderpumpe der Abströmeinrichtung für das Rücklauföl, das beim Betrieb des Lagerungssystems abgeführt werden muß, als Bestandteil einer Hydromotor-Hydropumpeneinheit durch das Hydrauliksystem selbst angetrieben ist, nämlich durch das von der Druckquelle zum Eingang des Hydromotors strömende Drucköl, entfallen externe Antriebseinrichtungen wie elektrische Pumpenantriebe mit zugehörigen Versorgungs- und Steuerleitungen. Neben dem dadurch ermöglichten einfachen und kompakten Aufbau vermeidet das erfindungsgemäße System, dass bei Unterschieden zwischen dem dem Lager zugeführten und dem abgeführten Ölstrom ein zu hoher oder ein zu niedriger Druck in der Lagertasche entsteht. Während beim Stand der Technik ein zur Umgebung offenes System vorhanden ist, bei dem das aus den Rücklaufsammlern frei, d. h. drucklos, abströmende Öl in einen offenen Sammlertank gelangt, aus dem es bedarfsweise (niveaugesteuert) abgepumpt wird, bildet die Abströmeinrichtung bei der Erfindung ein von den Rücklaufsammlern bis zur Förderpumpe gegenüber der Umgebung geschlossenes System. Im Unterschied zu den bekannten Systemen ist daher kein Kontakt zwischen der Umgebungsluft und dem Rücklauföl möglich, so dass die Gefahr der Verschmutzung durch Partikel und Kühlschmierstoffe sowie der Luftblasenbildung im Öl vermieden ist. Beim Stand der Technik führen jedoch Luftblasen im Öl, wenn sie durch die Hochdruckpumpe angesaugt und in die Lagertaschen gefördert werden, zu Problemen, insbesondere zu einer Verringerung der Führungsqualität.

Bei vorteilhaften Ausführungsbeispielen ist für die Einstellung eines gewünschten Absaugdruckes an der Saugseite der Förderpumpe eine Einrichtung zur Drehzahlregelung des Hydromotors vorhanden. Dadurch lassen sich optimale Betriebsverhältnisse erzielen, indem seitens der Rücklaufsammler der Druck auf sehr niedrigem Niveau, etwa im Bereich von 1 bar ± 0,1 bar absolut, eingestellt wird. Insbesondere kann so der Absaugdruck auf einem Wert gehalten werden, bei dem der aus den Sammlern angesaugte Ölstrom gleich dem in die Lagertaschen geförderten Ölstrom ist.

Bei besonders vorteilhaften Ausführungsbeispielen weist die Einrichtung zur Drehzahlregelung ein einstellbares Drosselventil oder einstellbares Stromregelventil auf, über das von der Ausgangsseite des Hydromotors her ein Teil-Volumenstrom abzweigbar ist, der zusammen mit dem den jeweiligen Lagertaschen zugeführten Volumenstrom den den Hydromotor antreibenden Gesamt-Volumenstrom bildet. Die Antriebsleistung, die vom Hydromotor an die Förderpumpe geliefert wird, läßt sich daher erhöhen, indem über das Drosselventil oder Stromregelventil ein größerer Teil-Volumenstrom abgezweigt wird oder umgekehrt.

Vorzugsweise ist hierfür ein stetig verstellbares Drossel- oder Stromregelventil vorgesehen, das durch ein elektrisches Steuersignal einstellbar ist, das ein an der Saugseite der Förderpumpe angeschlossener Druck-Spannungswandler erzeugt. Eine weitere vorteilhafte Ausführung kommt ohne Druck-Spannungswandler, elektrischen Signalzweig und ohne elektrisch angesteuertes Stromventil aus. Stattdessen wird das stetig verstellbare Stromventil unmittelbar durch den Druck in der Saugleitung der Pumpe angesteuert. Ein besonders günstiges Betriebsverhalten ergibt sich, wenn an der Saugseite der Förderpumpe ein Unterdruck-Hydrospeicher zur Stabilisierung des Absaugdruckes für den Rücklaufsaugstrom angeschlossen ist.

Bei besonders vorteilhaften Ausführungsbeispielen ist als den Volumenstrom beeinflussendes Steuerelement für jede der zu versorgenden Lagertaschen ein diesen jeweils vorgeschaltetes Stromregelventil vorhanden, so dass der Drucköl-Volumenstrom für jede Lagertasche angepaßt voreingestellt werden kann.

Bei besonders vorteilhaften Ausführungsbeispielen der Erfindung ist zur Bildung einer Schienen-Linearführung mindestens ein Führungswagen vorhanden, der eine Lagerfläche aufweist, mit der er an einer Schiene, insbesondere an einer Werkzeugmaschine, geführt ist, in der zumindest eine zur Lagerfläche offene Lagertasche ausgebildet ist, die über einen an der Lagerfläche gebildeten Dichtspalt von einem in der Schiene ausgebildeten Rücklaufraum getrennt ist, der als Rücklaufsammler das aus der Lagertasche über den Dichtspalt austretende Öl aufnimmt.

Dabei kann die Anordnung vorzugsweise so getroffen sein, dass der Rücklaufsammler durch eine Niederdruckabdichtung gegenüber der Lagerfläche und der Schiene abgedichtet ist.

Dank der durch die Erfindung ermöglichten zuverlässigen Einstellung des Absaugdruckes auf ein wünschenswertes, sehr niedriges Druckniveau, kann in vorteilhafter Weise als Niederdruckabdichtung eine reibungsarm an den zugeordneten Dichtflächen anliegende gummielastische Dichtung vorgesehen sein.

Aufgrund der kompakten und einfachen Bauweise ohne externe Antriebseinrichtungen läßt sich die Hydromotor-Hydropumpeneinheit sowie die Einrichtung zur Drehzahlregelung des Hydromotors in einem der Versorgung sämtlicher Lagertaschen dienenden Absaugmodul baulich zusammenfassen.

Dadurch ergibt sich die besonders vorteilhafte Möglichkeit, den Absaugmodul zusammen mit dem als Kleinspeicher ausgebildeten Unterdruck-Hydrospeicher als Anbaublock zu gestalten, der an einer Werkzeugmaschine anbringbar ist.

Nachstehend ist die Erfindung anhand von in der Zeichnung dargestellten Ausführungsbeispielen im Einzelnen erläutert. Es zeigen:
- Fig. 1 eine diagrammartig vereinfachte Blockdarstellung eines dem Stand der Technik entsprechenden hydrostatischen Lagerungssystems für eine Schienen-Linearführung zur Benutzung an einer Werkzeugmaschine, wobei vier Führungswagen mit jeweils vier hydrostatischen Lagertaschen, von denen lediglich ein Führungswagen schematisch vereinfacht angedeutet ist, vorgesehen sind;
- Fig. 2 eine der Fig. 1 ähnliche Darstellung, wobei demgegenüber jedoch ein erstes Ausführungsbeispiel des erfindungsgemäßen Lagerungssystems dargestellt ist;
- Fig. 3 eine den Fig. 1 und 2 ähnliche Darstellung, wobei jedoch ein zweites Ausführungsbeispiel des erfindungsgemäßen Lagerungssystems dargestellt ist;
- Fig. 4 eine der Fig. 3 ähnliche Darstellung, mit direkter Drucksignalsteuerung des Stromventils;
- Fig. 5 ein mit Druck ansteuerbares, stetig verstellbares Stromventil;
- Fig. 6 eine schematisch vereinfachte Seitenansicht eines Anbaublockes, in dem Komponenten des Ausführungsbeispieles von Fig. 2 zu einer Baueinheit zusammengefaßt sind, und
- Fig. 7 eine schematisch vereinfachte Stirnansicht des Anbaublockes von Fig. 6.

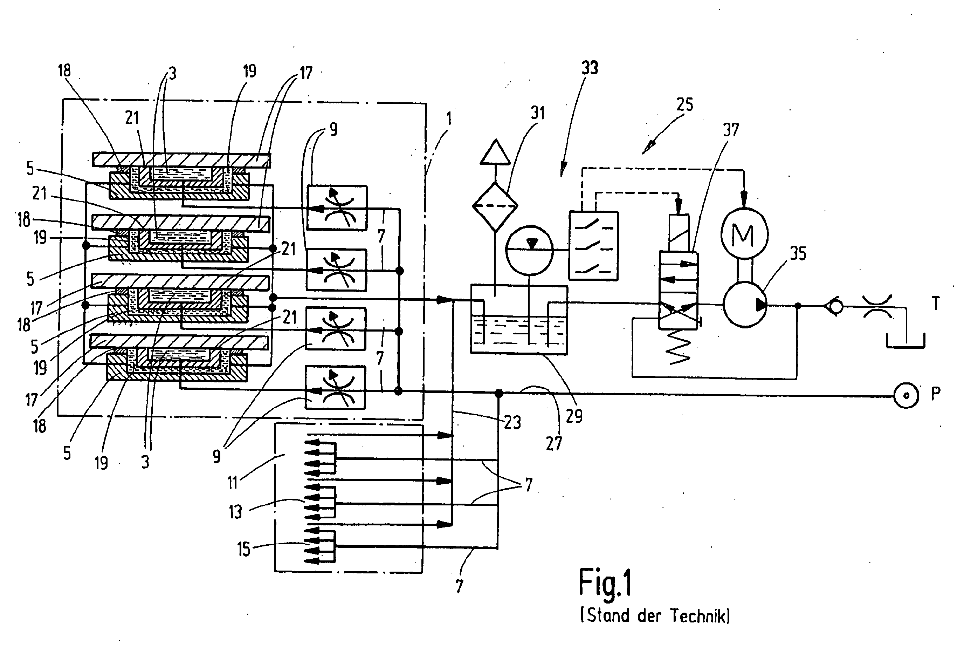

Die Fig. 1 zeigt ein dem Stand der Technik entsprechendes hydrostatisches Lagerungssystem für vier an einer Schiene einer nicht dargestellten Werkzeugmaschine gelagerten Führungswagen 1, von denen lediglich einer schematisiert vereinfacht angedeutet ist. Jeder dieser Führungswagen weist, wie dies bei dem in Fig. 1 dargestellten Führungswagen 1 angedeutet ist, vier hydrostatische Lagertaschen 3 auf, die in einem zugehörigen Schienenteil 5 ausgebildet und über je eine Druckleitung 7 mit einem Drucköl-Volumenstrom versorgbar sind, um in den Lagertaschen 3 ein tragendes Öldruckniveau aufzubauen. In den Druckleitungen 7 ist jeder Lagertasche 3 ein Stromregelventil 9 vorgeschaltet, um die Zufuhr des Drucköl-Volumenstromes an die Gegebenheiten anzupassen. Anschlüsse für die nicht gezeigten drei weiteren Führungswagen, denen der Drucköl-Volumenstrom ebenfalls über die Druckleitungen 7 zugeführt wird, sind in Fig. 1 mit 11 bzw. 13 bzw. 15 bezeichnet.

Die zu den Lagerflächen 17 jedes Führungswagens offenen Lagertaschen 3 sind in den jeweiligen Schienenteilen 5 von einem Raum 19 umgeben, der einen Rücklaufsammler bildet, in den Lecköl aus den jeweiligen Lagertaschen 3 über einen Hochdruckdichtspalt 21 eintritt, der zwischen der Lagerfläche 17 und dem Rand der Lagertaschen 3 gebildet ist. Aus den als Rücklaufsammler dienenden Räumen 19 gelangt das Rücklauföl über eine gemeinsame Rücklaufleitung 23 zur als Ganzes mit 25 bezeichneten Abströmeinrichtung. Gegenüber der Umgebung sind die Rücklaufsammler 19 jeweils durch eine Niederdruck-Abdichtung 18 abgedichtet, die als nachgiebiges und dadurch reibungsarmes gummielastisches Dichtelement gestaltet ist, das zwischen dem den betreffenden Rücklaufsammler 19 umgebenden Rand des betreffenden Schienenteiles 5 und der gegenüberliegenden Lagerfläche 17 angeordnet ist. Die Zufuhr des Drucköl-Volumenstromes über die Druckleitungen 7 zu den Lagertaschen 3 erfolgt von einer Druckquelle P des Systemes her über eine Druckversorgungsleitung 27.

Bestandteile der Abströmeinrichtung 25 sind ein Zwischenbehälter 29, in den das Rücklauföl über die Rücklaufleitung 23 frei einströmt. Der Behälter 29 ist über einen Entlüfter mit Entlüftungsfilter 31 zur Umgebung hin belüftet. Ein den Flüssigkeitspegel im Behälter 29 erkennender Niveauschalter 33 erzeugt ein Schaltsignal, um mittels einer elektromotorisch angetriebenen Förderpumpe 35 bedarfsweise Öl aus dem Zwischenbehälter 29 abzupumpen und zur Tankseite T des Systems zurückzuführen. Die Fig. 1 zeigt zwei mögliche Alternativen für das Abpumpen aus dem Behälter 29, nämlich die Benutzung einer geschalteten Pumpe 35 oder die Möglichkeit, eine Durchlaufpumpe 35 vorzusehen, wobei ein Wegeventil 37 bedarfsweise in den Sperr- oder Freigabezustand geschaltet wird.

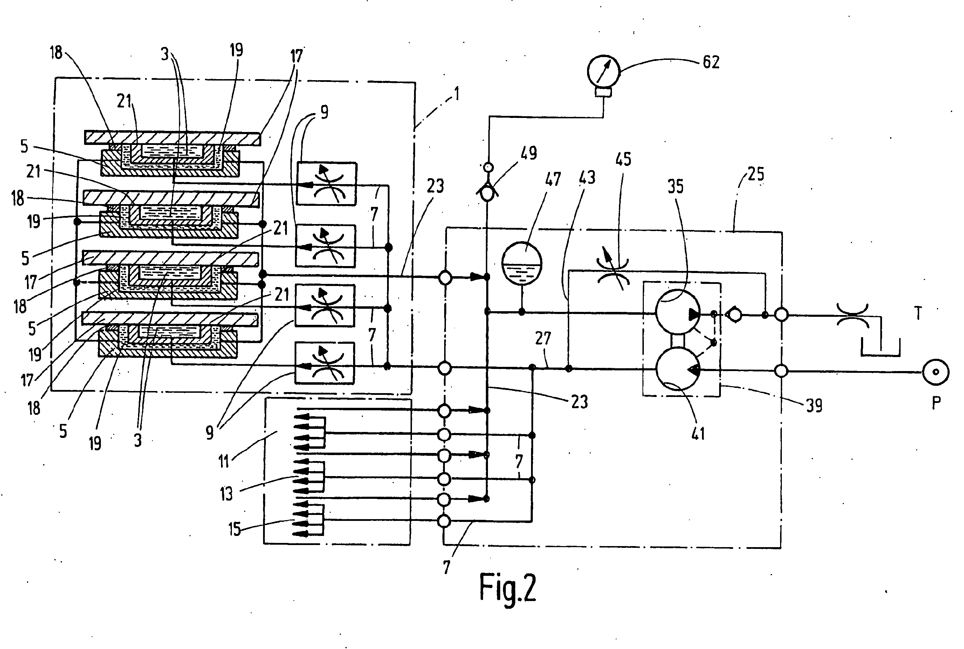

Das in Fig. 2 dargestellte Ausführungsbeispiel des erfindungsgemäßen Lagerungssystem unterscheidet sich gegenüber der in Fig. 1 gezeigten, dem Stand der Technik entsprechenden Lösung grundsätzlich durch die andersartige Gestaltung der Abströmeinrichtung 25. Während bei Fig. 1 ein freies Abströmen aus den Rücklaufsammlern 19 in einen offenen Behälter 29 erfolgt, handelt es sich bei der Erfindung demgegenüber um ein Absaugsystem, das von den die Lagertaschen 3 umgebenden Rücklaufsammlern 19 bis zum stromabwärts der Förderpumpe 35 gelegenen Tankanschluß T in sich geschlossen ist. Demgemäß ist die Saugseite der Förderpumpe 35 unmittelbar mit der Rücklaufleitung 23 verbunden. Um zu gewährleisten, dass einerseits das Absaugen des Rücklaufvolumens mit einem gewünschten, genau definierten und geeigneten Absaugdruck erfolgt, ist erfindungsgemäß eine Drehzahlregelung der Förderpumpe 35 vorgesehen. Dies erfolgt in der Weise, dass die Förderpumpe 35 Bestandteil einer Hydromotor-Hydropumpeneinheit 39 ist, die eine Art Rotations-Stromteiler bildet, nämlich dergestalt, dass der Hydromotor 41 der Einheit 39 eingangsseitig mit der Hochdruckquelle P verbunden und somit von dem von der Druckquelle her zuströmendem Drucköl-Volumenstrom angetrieben ist. Für die Drehzahlregelung des Hydromotors 41 ist dessen Ausgangsseite nicht nur mit der Versorgungsleitung 27 für die Versorgung der Lagertaschen 3 über die Druckleitungen 7 in Verbindung, sondern auch mit einer Abzweigleitung 43, über die von der Ausgangsseite des Hydromotors 41 her ein Teil-Volumenstrom abzweigbar und der Tankseite zuführbar ist. Dieser Teil-Volumenstrom bildet zusammen mit dem Volumenstrom in der Versorgungsleitung 27 den Gesamt-Volumenstrom, der den Hydromotor 41 antreibt, so dass durch Regelung des Teil-Volumenstromes in der Abzweigleitung 43 die Drehzahl des Hydromotors 41 einstellbar und damit die Saugleistung der Förderpumpe 35 regelbar ist.

Bei dem in Fig. 2 gezeigten Ausführungsbeispiel ist eine Verstelldrossel 45 in der Abzweigleitung 43 für die Drehzahlregelung vorgesehen. Beim Betrieb des Systems läßt sich dadurch der Absaugdruck auf einen gewünschten niedrigen Wert einstellen, etwa in der Größenordnung von 1 bar ±0,1 bar absolut, wodurch erreicht wird, dass der aus den Rücklaufsammlern angesaugte Ölstrom gleich dem in die Lagertaschen 3 geförderten Ölstrom ist und sich somit in den Sammlern 19 ein konstanter, niedriger Öldruck einstellt, bei dem die betriebssichere Abdichtung der Rücklaufsammler 19 nach außen hin mittels einer reibungsarmen, gummielastischen Abdichtung 18 erfolgen kann.

Um den Absaugdruck pulsationsfrei zu stabilisieren, ist beim Ausführungsbeispiel ein mit der Rücklaufleitung 23 und der Saugseite der Förderpumpe 35 verbundener Unterdruck-Hydrospeicher 47 vorgesehen. Ein an der Rücklaufleitung 23 ebenfalls angeschlossener Minimeßanschluß ist mit 49 bezeichnet. Der Minimeßanschluß dient dem Anschluß eines Manometers 62. Der für die Lagerstelle gewünschte Unterdruck in der Saugleitung kann am Stromventil 45 eingestellt werden, unter Kontrolle am Manometer 62.

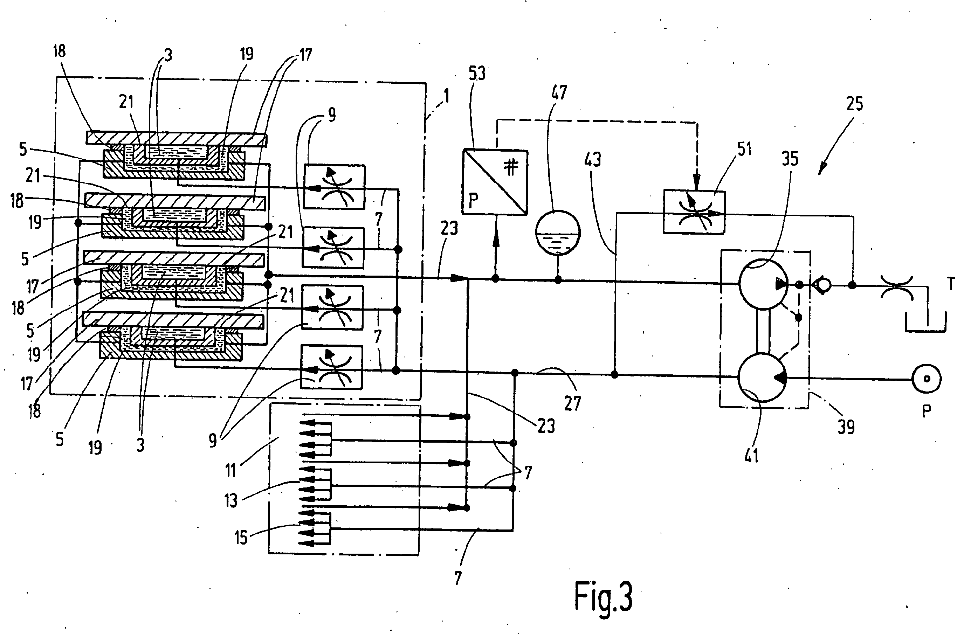

Das in Fig. 3 dargestellte zweite Ausführungsbeispiel der Erfindung unterscheidet sich vom Ausführungsbeispiel gemäß Fig. 2 lediglich insofern, als anstelle der Verstelldrossel 45 in der Abzweigleitung 43 zur Drehzahlregelung des Hydromotors 41 ein stetig verstellbares Stromregelventil 51 vorgesehen ist. Dieses ist mittels eines Steuersignales einstellbar, das ein an der Rücklaufleitung 23 angeschlossener Druck-Spannungswandler 53 erzeugt.

In vorteilhafter Weise erfolgt bei diesem Ausführungsbeispiel eine selbsttätige Regelung der Absaugung in Anpassung an gegebenenfalls schwankende Raten des Drucköl-Volumenstromes, der den Lagertaschen 3 bei wechselnden Betriebsbedingungen zuströmt. Mit anderen Worten gesagt, erfolgt selbsttätig die Regelung der Absaugwirkung in der Weise, dass der den Lagertaschen 3 zugeführte Volumenstrom gleich dem abgesaugten Rücklaufstrom ist. Dies führt zu einem optimalen Betriebsverhalten der Lagerung.

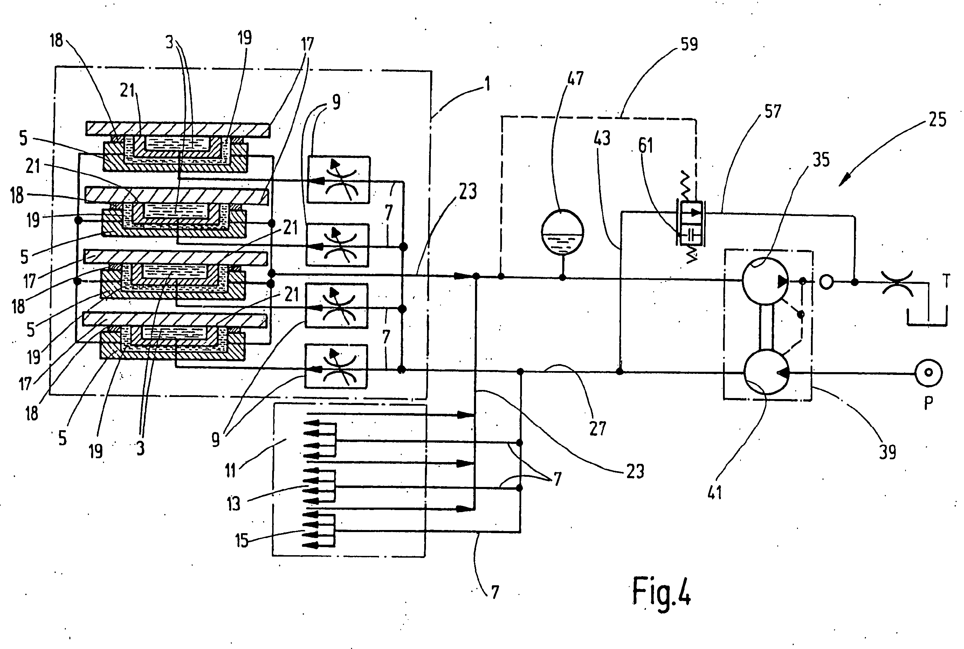

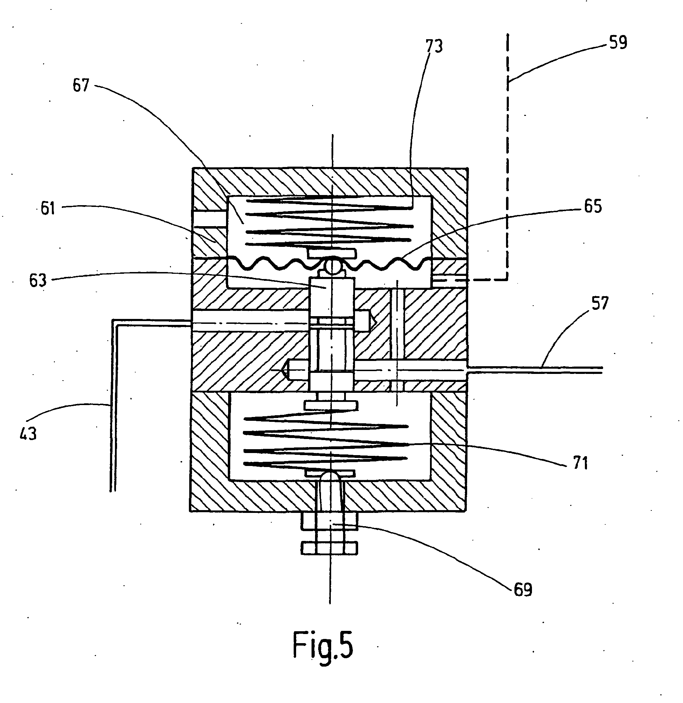

Eine Regelung des Saugdruckes ohne elektrische Meßsignale und elektrisch ansteuerbares Stromventil ist in Fig.4 dargestellt. Über die Drucksignalleitung 59 wird hierbei ein hydraulisch ansteuerbares Stromventil 61 direkt betätigt, das ei ngangsseitig mit der Abzweigleitung 43 und ausgangsseitig über eine Leitung 57 mit der Tankseite T verbunden ist. Hierfür benutzt man vorteilhafterweise ein in Fig.5 dargestelltes Stromventil 61 für Drucksignale im Niederdruckbereich, das Drucksignale im Bereich 1 bar absolut +/- 0,1 bar verarbeiten kann.
Hierbei wirkt der Steuerdruck in Leitung 59 sowohl auf den durch die Federn 71 und 73 zentrierten Kolben 63 als auch auf die Steuermembran 65. Auf die Gegenseite 67 der Steuermembran 65 wirkt der Luftdruck der Umgebung. Über die Stellschraube 69 kann die Feder 71 verstellt werden. Dadurch wird der Kolben 63 nach oben verschoben und der Durchfluß durch das Ventil nimmt zu. Dies führt zu einer Erhöhung der Saugleistung der Saugpumpe 35, und der Druck in der Leitung 23 sinkt ab. Diese Druckabsenkung wird über Leitung 59 auf die Steuermembran 65 geleitet, so dass der Kolben 63 sich wieder so lange nach unten bewegt, bis er sich in einer neuen Position einregelt.

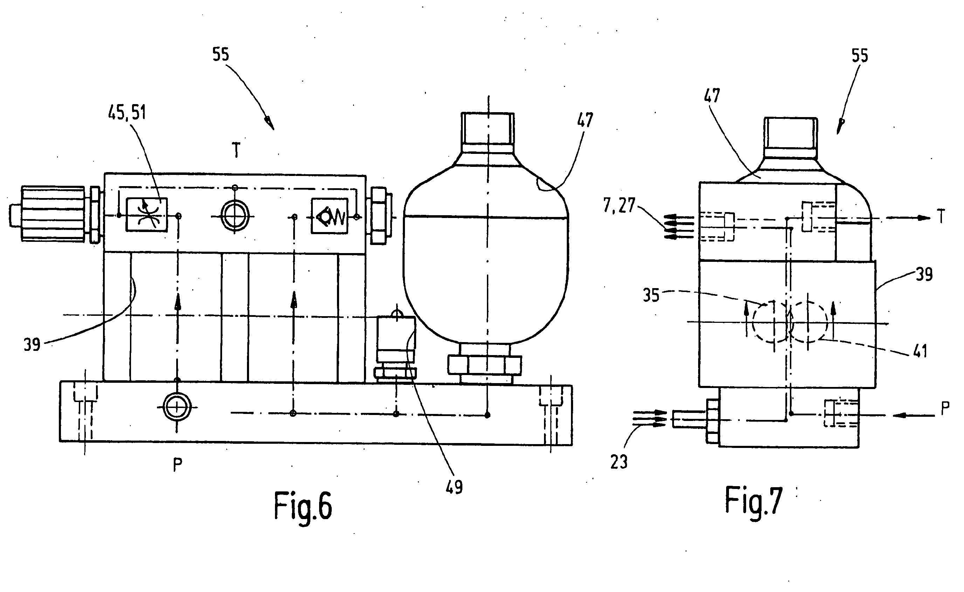

Dadurch, dass bei der Erfindung kein elektromotorischer Fremdantrieb der Förderpumpe 35 oder ein zur Umgebung offener Behälter 29 als Zwischensammler für Rücklauföl vorgesehen ist, läßt sich die Erfindung in besonders kompakter Bauweise verwirklichen, indem die Abströmeinrichtung zu einem Anbaublock 55 baulich zusammengefaßt ist, in dem, wie dies in Fig. 6 und 7 verdeutlicht ist, die Hydromotor-Hydropumpeneinheit 39, die Einrichtung zur Drehzahlregelung des Hydromotors 41 mit einem Drossel- oder Stromregelventil 45, 51 sowie der Hydrospeicher 47 zum Anbaublock 55 baulich zusammengefaßt sind, der unmittelbar an einer zugehörigen Werkzeugmaschine oder dergleichen anbaubar ist. Bei dem Hydrospeicher 47 kann es sich um einen Kleinspeicher, etwa mit einem Volumen von 0,16I handeln. Für einen Anbaublock 55 wie er in Fig. 4 und 5 verdeutlicht ist, ergeben sich somit Außenabmessungen etwa in der Größenordnung von etwa 280mm Länge, etwa 90mm Breite und etwa 160mm Höhe, also eine ohne Schwierigkeiten in Maschinenanlagen integrierbare Baugröße.

## Patentansprüche

1. Hydrostatisches Lagerungssystem mit zumindest einer hydrostatischen Lagertasche (3), zu der von einer Druckquelle (P) des hydraulischen Systems her ein tragender Drucköl-Volumenstrom zuführbar ist, wobei an jeder Lagertasche (3) ein Rücklaufsammler (19) zur Aufnahme von Öl vorgesehen ist, das über den die jeweilige Lagertasche (3) begrenzenden Hochdruck-Dichtspalt (21) aus der Lagertasche (3) austritt, und mit einer eine Förderpumpe (35) enthaltenden Abströmeinrichtung (25) zum Rückführen von Öl aus den Rücklaufsammlern (19) zum System, **dadurch gekennzeichnet, dass** die Förderpumpe (35) Bestandteil einer Hydromotor-Hydropumpeneinheit (39) ist, deren die Förderpumpe (35) antreibender Hydromotor (41) eingangsseitig mit der Druckquelle (P) und ausgangsseitig mit den jeweiligen Lagertaschen (3) in Verbindung ist, und dass die Saugseite der Förderpumpe (35) unmittelbar mit den jeweiligen Rücklaufsammlern (19) verbunden ist.

2. Hydrostatisches Lagerungssystem nach Anspruch 1, **dadurch gekennzeichnet, dass** für die Einstellung eines gewünschten Absaugdruckes an der Saugseite der Förderpumpe (35) eine Einrichtung (43, 45; 51, 53) zur Drehzahlregelung des Hydromotors (41) vorhanden ist.

3. Hydrostatisches Lagerungssystem nach Anspruch 2, **dadurch gekennzeichnet, dass** die Einrichtung zur Drehzahlregelung ein einstellbares Drosselventil oder einstellbares Stromregelventil (45;51) aufweist, über das von der Ausgangsseite des Hydromotors (41) her ein Teil-Volumenstrom abzweigbar ist, der zusammen mit dem den jeweiligen Lagertaschen (3) zugeführten Volumenstrom den den Hydromotor (41) antreibenden Gesamt-Volumenstrom bildet.

4. Hydrostatisches Lagerungssystem nach Anspruch 3, **dadurch gekennzeichnet, dass** ein stetig verstellbares Drossel- oder Stromregelventil (51) vorgesehen ist, das durch ein elektrisches Steuersignal einstellbar ist, das ein an der Saugseite der Förderpumpe (35) angeschlossener Druck-Spannungswandler (53) erzeugt.

5. Hydrostatisches Lagerungssystem nach Anspruch 3, **dadurch gekennzeichnet, dass** ein stetig verstellbares Drossel- und Stromregelventil (61) vorgesehen ist, das durch ein hydraulisches Signal einstellbar ist, das aus der Saugleitung (23) der Pumpe (35) kommt.

6. Hydrostatisches Lagerungssystem nach einem der Ansprüche 1 bis 5, **dadurch gekennzeichnet, dass** an der Saugseite der Förderpumpe (35) ein Unterdruck-Hydrospeicher (47) zur Stabilisierung des Absaugdrukkes für den Rücklauf-Saugstrom angeschlossen ist.

7. Hydrostatisches Lagerungssystem nach einem der Ansprüche 1 bis 6, **dadurch gekennzeichnet, dass** zur Einstellung des Drucköl-Volumenstromes für jede Lagertasche (3) ein dieser jeweils vorgeschaltetes Stromregelventil (9) vorhanden ist.

8. Hydrostatisches Lagerungssystem nach einem der Ansprüche 1 bis 7, **dadurch gekennzeichnet, dass** zur Bildung einer Schienen-Linearführung mindestens ein Führungswagen (1) vorhanden ist, der zumindest eine Lagerfläche (17) aufweist, mit der er an einer Schiene (5) geführt ist, in der zumindest eine zur Lagerfläche (17) offene Lagertasche (3) ausgebildet ist, die über einen an der Lagerfläche (17) gebildeten Dichtspalt (21) von einem in der Schiene (5) ausgebildeten Rücklaufraum getrennt ist, der als Rücklaufsammler (19) das aus der Lagertasche (3) über den Dichtspalt (21) austretende Öl aufnimmt.

9. Hydrostatisches Lagerungssystem nach Anspruch 8, **dadurch gekennzeichnet, dass** der Rücklaufsammler (19) durch eine Niederdruckabdichtung (18) gegenüber der Lagerfläche (17) und der Schiene (5) abgedichtet ist.

10. Hydrostatisches Lagerungssystem nach Anspruch 9, **dadurch gekennzeichnet, dass** als Niederdruckabdichtung eine reibungsarm an den zugeordneten Dichtflächen anliegende gummielastische Dichtung (18) vorgesehen ist.

11. Hydrostatisches Lagerungssystem nach einem der Ansprüche 2 bis 10, **dadurch gekennzeichnet, dass** die Hydromotor-Hydropumpeneinheit (39) sowie die Einrichtung (43, 45; 51, 53) zur Drehzahlregelung des Hydromotors (41) in einem der Versorgung sämtlicher Lagertaschen (3) dienenden Absaugmodul (25) baulich zusammengefaßt sind.

12. Hydrostatisches Lagerungssystem nach Anspruch 11, **dadurch gekennzeichnet, dass** der Absaugmodul (25) zusammen mit dem als Kleinspeicher ausgebildeten Unterdruck-Hydrospeicher (47) einen Anbaublock (55) zur Anbringung an einer Werkzeugmaschine bildet.

## Claims

1. A hydrostatic bearing system comprising at least one hydrostatic bearing pocket (3) to which a bearing volumetric flow of pressure oil can be conveyed from a pressure source (P) of the hydraulic system, there being provided on each bearing pocket (3) a return collector (19) for receiving oil which passes out of the bearing pocket (3) via the high pressure sealing gap (21) delimiting the respective bearing pocket (3), and comprising a dispersing device (25) including a conveying pump (35) for conveying oil from the return collectors (19) back to the system, characerised in that the conveying pump (35) is a component part of a hydromotor-hydropump unit (39) of which the hydromotor (41) driving the conveying pump (35) is connected on the input side to the pressure source (P) and on the output side to the respective bearing pockets (3), and that the suction side of the conveying pump (35) is connected directly to the respective return collectors (19).

2. The hydrostatic bearing system according to Claim 1, **characterised in that** a device (43, 45; 51, 53) for controlling the rotation speed of the hydromotor (41) is provided for setting a desired suction pressure on the suction side of the conveying pump (35).

3. The hydrostatic bearing system according to Claim 2, **characterised in that** the device for controlling the rotation speed has an adjustable throttle valve or an adjustable flow regulation valve (45;51) by means of which a partial volumetric flow can be branched off from the output side of the hydromotor (41), which partial volumetric flow together with the volumetric flow conveyed to the respective bearing pockets (3) forms the overall volumetric flow driving the hydromotor (41).

4. The hydrostatic bearing system according to Claim 3, **characterised in that** a constantly adjustable throttle or flow regulation valve (51) is provided that can be set by an electrical control signal that is generated by a pressure-voltage converter (53) connected on the suction side of the conveying pump (35).

5. The hydrostatic bearing system according to Claim 3, **characterised in that** a constantly adjustable throttle and flow regulation valve (61) is provided that can be set by a hydraulic signal that comes from the suction line (23) of the pump (35).

6. The hydrostatic bearing system according to any of Claims 1 to 5, **characterised in that** a negative pressure hydraulic accumulator (47) is connected on the suction side of the conveying plump (35) in order to stabilise the suction pressure for the return suction flow.

7. The hydrostatic bearing system according to any of Claims 1 to 6, **characterised in that** in order to set the volumetric flow of pressure oil for each bearing pocket (3) a flow regulation valve (9) respectively connected upstream of the latter is provided.

8. The hydrostatic bearing system according to any of Claims 1 to 7, **characterised in that** at least one guiding carriage (1) is provided in order to form a linear rail guide and which has at least one bearing surface (17) by means of which it is guided on a rail (5) in which at least one bearing pocket (3) open to the bearing surface (17) is formed which is separated from a collector space formed in the rail (5) by a sealing gap (21) formed on the bearing surface (17) which, as a return collector (19), receives the oil passing out of the bearing pocket (3) via the sealing gap (21).

9. The hydrostatic bearing system according to Claim 8, **characterised in that** the return collector (19) is sealed off from the bearing surface (17) and the rail (5) by a lower pressure seal (18).

10. The hydrostatic bearing system according to Claim 9,
**characterised in that** a rubbery elastic seal (18) resting with very little friction against the assigned sealing surfaces is provided as a low pressure seal.

11. The hydrostatic bearing system according to any of Claims 2 to 10, **characterised in that** the hydromotor-hydropump unit (39) and the device (43, 45; 51, 53) for controlling the rotation speed of the hydromotor (41) are combined structurally in a suction module (25) serving to supply all of the bearing pockets (3).

12. The hydrostatic bearing system according to Claim 11, **characterised in that** the suction module (25) together with the negative pressure hydraulic accumulator (47) in the form of a small accumulator forms an add-on block (55) for attachment to a machine tool.

## Revendications

1. Système de palier hydrostatique ayant au moins une poche (3) de palier hydrostatique, à laquelle un courant en volume porteur d'huile sous pression peut être envoyé par une source (P) de pression du système hydraulique, dans lequel, sur chaque poche (3) de palier, est prévu, pour la réception d'huile, un collecteur (19) de retour, qui sort de la poche (3) de palier par la fente (21) d'étanchéité sous haute pression délimitant la poche (3) de palier respective et comprenant un dispositif (25) d'évacuation, contenant une pompe (35) d'alimentation pour retourner de l'huile du collecteur (19) de retour au système, **caractérisé en ce que** la pompe (35) d'alimentation fait partie d'un groupe (39) moteur hydraulique-pompe hydraulique, dont le moteur (41) hydraulique entraînant la pompe (35) d'alimentation communique du côté de l'entrée avec la source (P) de pression et du côté de la sortie avec la poche (3) de palier respective_et **en ce que** le côté aspiration de la pompe (35) d'alimentation communique directement avec le collecteur (19) de retour respectif.

2. Système de palier hydrostatique suivant la revendication 1, **caractérisé en ce qu'**il y a, pour le réglage d'une pression d'aspiration souhaitée, du côté de l'aspiration de la pompe (35) d'alimentation, un dispositif (43, 45; 51, 53) de régulation de la vitesse de rotation du moteur (41) hydraulique.

3. Système de palier hydrostatique suivant la revendication 2, **caractérisé en ce que** le dispositif de régulation de la vitesse de rotation a une vanne d'étranglement ou une vanne (45;51) réglable de régulation du débit, par laquelle un courant partiel en volume peut être dévié du côté de sortie du moteur (41) hydraulique, courant qui, ensemble avec le courant en volume envoyé à la poche (3) de palier respective, forme le courant en volume total entraînant le moteur (41) hydraulique.

4. Système de palier hydrostatique suivant la revendication 3, **caractérisé en ce qu'**il est prévu une vanne (51) d'étranglement ou de régulation du courant, qui peut être réglée constamment et qui peut être réglée'par un signal électrique de commande que produit un transducteur (53) pression-tension raccordé au côté aspiration de la pompe (35) d'alimentation.

5. Système de palier hydrostatique suivant la revendication 3, **caractérisé en ce qu'**il est prévu une vanne (61) d'étranglement et de régulation du courant, qui peut être réglée constamment et qui est réglable par un signal électrique, qui vient de la tubulure (23) d'aspiration de la pompe (35).

6. Système de palier hydrostatique suivant l'une des revendications 1 à 5, **caractérisé en ce que**, côté aspiration de la pompe (35) d'alimentation, est raccordé un hydro-accumulateur (47) sous pression pour la stabilisation de la pression d'aspiration du courant d'aspiration de retour.

7. Système de palier hydrostatique suivant l'une des revendications 1 à 6, **caractérisé en ce qu'**il y a, pour le réglage du courant en volume d'huile sous pression, pour chaque poche (3) de palier, une vanne (9) de régulation du courant montée respectivement en aval de celle-ci.

8. Système de palier hydrostatique suivant l'une des revendications 1 à 7, **caractérisé en ce qu'**il y a, pour la formation d'un guidage linéaire par rail, au moins un chariot (1) de guidage, qui a au moins une surface (17) de palier, par laquelle il est guidé sur un rail (5), dans lequel est formée au moins une poche (3) de palier ouverte vers la surface (17) de palier, poche qui est, par une fente (21) d'étanchéité formée à la surface (17) de palier, séparée d'un espace de retour, qui est formé dans le rail (5) et qui reçoit en tant que collecteur (19) de retour l'huile sortant de la poche (3) de palier par la fente (21) d'étanchéité.

9. Système de palier hydrostatique suivant la revendication 8, **caractérisé en ce que** le collecteur (19) de retour est rendu étanche par rapport à la surface (17) de palier et par rapport au rail (5) par une étanchéité (18) basse pression.

10. Système de palier hydrostatique suivant la revendication 9, **caractérisé en ce qu'**il est prévu, comme étanchéité basse pression, une garniture (18) ayant l'élasticité du caoutchouc s'appliquant avec peu de frottement aux surfaces d'étanchéité associées.

11. Système de palier hydrostatique suivant l'une des revendications 2 à 10, **caractérisé en ce que** le groupe (39) moteur hydraulique-pompe hydraulique, ainsi que le dispositif (43, 45; 51, 53) de la régulation de la vitesse de rotation du moteur (41) hydraulique sont rassemblés en construction dans un module (25) d'aspiration servant à l'alimentation de toutes les poches (3) de palier.

12. Système de palier hydrostatique suivant la revendication 11, **caractérisé en ce que** le module (25) d'aspiration, ensemble avec l'accumulateur (47) hydraulique sous pression constitué sous la forme d'un accumulateur petit, forme un bloc (55) supplémentaire à mettre sur une machine-outil.
